# EUROPÄISCHE PATENTANMELDUNG

(11) **EP 1 974 886 A1**
(43) Veröffentlichungstag der Anmeldung: **01.10.2008**
(21) Anmeldenummer: 08003767.4
(22) Anmeldetag: 29.02.2008
(51) Int. Cl.: B29C 45/00, B29C 45/32

(54) **Vorrichtung zum Spritzgiessen eines mehrteiligen Kunststoffbauteils**

(30) Priorität: 28.03.2007 DE 102007014847
(71) Anmelder: Bayerische Motoren Werke Aktiengesellschaft, 80809 München (DE)
(72) Erfinder: Nolewajka, Marek, 84034 Landshut (DE)

(57) **Zusammenfassung**

Eine Vorrichtung zum Spritzgießen eines mehrteiligen Kunststoffbauteils mit mindestens zwei äußeren Werkzeugelementen und mindestens zwei zwischen den äußeren Werkzeugelementen angeordneten inneren Werkzeugelementen, wobei die äußeren Werkzeugelemente mit dem jeweils angrenzenden inneren Werkzeugelement jeweils eine Kavität bilden, in die mittels eines oder mehrerer Spritzaggregate zur Erzeugung eines Spritzgusseinzelteils eine Kunststoffformmasse eingebracht werden kann, ist dadurch gekennzeichnet, dass die zwei inneren Werkzeugelemente dreh- und/oder verfahrbar ausgebildet sind.

## Beschreibung

Die Erfindung betrifft eine Vorrichtung zum Spritzgießen eines mehrteiligen Kunststoffbauteils, insbesondere eines einen offenen oder geschlossenen Hohlraum umschließenden Kunststoffbauteils.

Aus der DE-OS 25 01 291 ist ein Verfahren zur Herstellung eines Hohlkörpers mittels Spritzgießens bekannt. Hierbei werden in einer Spritzgießvorrichtung zwei Einzelschalen erzeugt, die daraufhin aufeinander gelegt und verbunden werden, indem in einen Fügenahthohlraum, der von den zwei aneinander liegenden Halbschalen gebildet wird, ein Kunststoff eingespritzt wird. Die in der DE-OS 25 01 291 offenbarte Vorrichtung zur Durchführung des Verfahrens weist zwei äußere Werkzeugelemente und ein zwischen diesen Werkzeugelementen angeordnetes inneres Werkzeugelement an. Das innere Werkzeugelement bildet mit jedem der äußeren Werkzeugelemente eine Kavität, in die zur Herstellung der Einzelschalen eine thermoplastische Formmasse eingespritzt wird. Nach dem Aushärten dieser Formmasse werden die zwei äußeren Werkzeugelemente translatorisch auseinander gefahren, wobei die ausgehärteten Einzelschalen an diesen fixiert bleiben. Nach dem Entfernen des inneren Werkzeugelements werden die zwei äußeren Werkzeugelemente wiederum so weit zusammengefahren, bis die zwei Einzelschalen aneinander anliegen. Durch das Einspritzen eines thermoplastischen Kunststoffs in den Fügenahthohlraum werden die beiden Einzeischalen miteinander gefügt. Die in der DE-OS 25 01 291 offenbarte Vorrichtung ermöglicht die Herstellung eines mehrteiligen, einen Hohlraum ausbildenden Kunststoffbauteils in einem einzigen (dreiteiligen) Spritzgusswerkzeug.

Nachteilig an der in der DE-OS 25 01 291 offenbarten Vorrichtung ist, dass das Spritzgießen der Einzelschalen sowie deren Fügen in zwei nachfolgend ablaufenden Prozessschritten erfolgt und das Werkzeug während beider Prozessschritten belegt ist und folglich während des Fügeprozeßschrittes kein Spritzgießen weiterer Einzelschalen erfolgen kann.

Ausgehend von diesem Stand der Technik liegt der Erfindung die Aufgabe zugrunde, eine Vorrichtung zum Spritzgießen eines mehrteiligen Kunststoffbauteils, insbesondere eines einen offenen oder geschlossenen Hohlraum ausbildenden, mehrteiligen Kunststoffbauteils anzugeben, die eine Verringerung der Taktzeit zur Herstellung eines Bauteils ermöglicht.

Diese Aufgabe wird durch eine Vorrichtung gemäß dem Hauptanspruch gelöst. Vorteilhafte Weiterbildungen sind Gegenstand der abhängigen Patentansprüche.

Der Kern der Erfindung sieht vor, bei einer Vorrichtung zum Spritzgießen eines mehrteiligen Kunststoffbauteils zwischen mindestens zwei äußeren Werkzeugelementen mindestens zwei innere Werkzeugelemente anzuordnen, wobei die äußeren Werkzeugelemente mit dem jeweils angrenzenden inneren Werkzeugelement eine Kavität ausbilden, in die mittels eines oder mehrerer Einspritzaggregate zur Erzeugung eines Spritzgusseinzelteils eine Kunststoffformmasse eingebracht werden kann, und wobei die zwei inneren Werkzeugelemente dreh- und/oder (translatorisch) verfahrbar ausgebildet sind.

Die erfindungsgemäße Ausgestaltung einer Spritzgießvorrichtung ermöglicht, die zwei inneren Werkzeugelemente, beispielsweise nach einer Drehung um 180° oder einer Verfahrbewegung, bei der die die Spritzgießeinzelteile fixierenden Seiten der inneren Werkzeugelemente in eine Gegenüberlage gebracht werden, zum nachträglichen Fügen der beiden Einzelteile zu verwenden. Das Fügen kann vorteilhafterweise durch Einspritzen einer Kunststoffformmasse und insbesondere eines thermoplastischen Elastomers (TPE) erfolgen. Da die beiden äußeren Werkzeugelemente während des Fügeprozesses nicht mehr belegt sind, können diese bereits für das Spritzgießen nachfolgender Spritzgussteile vorbereitet bzw. verwendet werden.

Erfindungsgemäß sollten die inneren Werkzeuge derart ausgebildet sein, dass die Spritzgussteile beim Öffnen der jeweils aus einem äußeren und einem inneren Werkzeugelement gebildeten Form (Kavität) an diesen fixiert bleiben. Vorzugsweise können hierfür besondere Mittel vorgesehen werden, die die Spritzgusseinzelteile während des Öffnens sowie während der Drehung an den inneren Werkzeugelementen fixieren. Diese Mittel können beliebig ausgebildet sein und insbesondere durch eine kraftschlüssige Wirkung das jeweilige Spritzgussteil an dem inneren Werkzeugelement fixieren. Als konkretes Beispiel können Mittel genannt werden, die die Spritzgusseinzelteile mittels Unterdrucks oder eines Schiebers an den inneren Werkzeugelementen fixieren.

In einer vorteilhaften Ausführungsform der vorliegenden Erfindung sind die inneren Werkzeuge sowohl rotierbar als auch translatorisch verfahrbar ausgebildet. Das translatorische Verfahren der inneren Werkzeugelemente kann in diesem Fall dazu dienen, die jeweils aus einem äußeren und einem inneren Werkzeugelement gebildeten Formen zu öffnen und/oder - nach einer Drehung der beiden inneren Werkzeugelemente - diese soweit zusammenzufahren, dass ein Fügen der Kunststoffteile zu dem mehrteiligen Kunststoffbauteil ermöglicht wird. Zum Verfahren der inneren Werkzeugelemente können jegliche hierzu geeigneten Mittel vorgesehen werden; insbesondere eignen sich hierfür elektrisch betriebene Linearmotoren sowie hydraulisch und/oder pneumatisch betriebene Zylinder.

Alternativ oder zusätzlich können auch die äußeren Werkzeugelemente translatorisch verfahrbar sein, so dass insbesondere ein Öffnen der jeweils aus einem äußeren und einem inneren Werkzeugelement gebildeten Form (Kavität) auch durch ein Verfahren der äußeren Werkzeugelemente erfolgen kann.

In einer bevorzugten Ausführungsform weist die erfindungsgemäße Vorrichtung zudem ein Fügeaggregat auf, das dem Fügen der mindestens zwei Spritzgusseinzelteile zu dem mehrteiligen Kunststoffbauteil dient.

Das Fügeaggregat kann vorteilhafterweise das oder eines der Spritzaggregate sein, die zur Erzeugung der mindestens zwei Spritzgusseinzelteile verwendet werden. Insbesondere können die Spritzgusseinzelteile durch das Einspritzen eines Kunststoffs, und insbesondere eines thermoplastischen Elastomers (TPE) oder auch desselben Kunststoffs, aus dem diese hergestellt sind, in einen von den Spritzgusseinzelteilen gebildeten Fügenahthohlraum erfolgen.

Alternativ kann das Fügeaggregat auch dem Auftragen eines Klebstoffs auf vorgesehene Klebeflächen der Spritzgussteile dienen.

Eine weitere alternative Ausführungsform sieht ein Fügeaggregat vor, das ein Erwärmen und Anschmelzen definierter Fügeflächen der Spritzgusseinzelteile vorsieht, so dass diese durch Stumpfschweißen miteinander verbunden werden.

In einer besonders bevorzugten Ausführungsform der vorliegenden Erfindung weisen die inneren Werkzeuge mindestens zwei Seiten auf, die mit den äußeren Werkzeugen eine Kavität ausbilden können, in die zur Erzeugung eines Spritzgusseinzelteils eine Kunststoffformmasse eingebracht werden kann. Eine derartige Ausgestaltung der erfindungsgemäßen Vorrichtung ermöglicht das gleichzeitige Herstellen der Spritzgusseinzelteile sowie das Fügen zuvor hergestellter Spritzgusseinzelteile.

Insbesondere wenn für das abschließende Entnehmen des mehrteiligen Kunststoffbauteils aus einem der inneren Werkzeugelemente verhältnismäßig viel Zeit benötigt wird, beispielsweise wegen einer Abkühlung auf eine erforderliche Temperatur, können die inneren Werkzeugelemente vorzugsweise auch drei oder vier Seiten aufweisen, die mit den äußeren Werkzeugelementen eine Kavität ausbilden können. Auf diese Weise können gleichzeitig zwei Spritzgusseinzelteile gefertigt werden, zwei zuvor hergestellte Spritzgusseinzelteile zu einem mehrteiligen Kunststoffbauteil gefügt werden und ein wiederum davor gefügtes mehrteiliges Kunststoffbauteil aus einem der inneren Werkzeugelemente entnommen werden.

Die Erfindung wird nachfolgend anhand eines in den Zeichnungen dargestellten Ausführungsbeispiels näher erläutert.

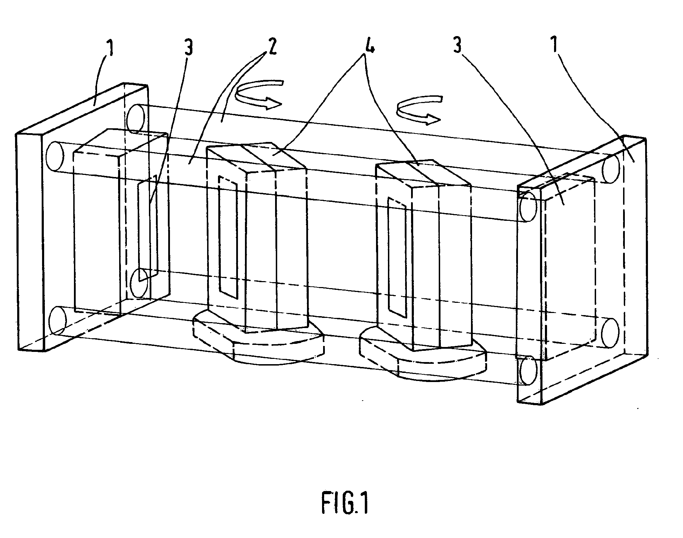

In der Zeichnung zeigt
- Fig. 1:: eine erfindungsgemäße Vorrichtung in einer isometrischen Darstellung.

Die in der Fig. 1 dargestellte Vorrichtung zum Spritzgießen eines mehrteiligen Kunststoffbauteils weist einen Rahmen aus zwei Maschinenplatten 1 sowie vier, die Maschinenplatten verbindende Holme 2 auf.

Jeweils ein äußeres Werkzeugelement 3 ist an einer der Maschinenplatten 1 anliegend positioniert.

Innerhalb des durch die Holme 2 definierten Raums und zwischen den zwei äußeren Werkzeugelementen 3 befinden sich zwei innere, quaderförmige Werkzeugelemente 4, die mittels nicht dargestellter Antriebe sowohl rotatorisch als auch translatorisch entlang der durch die Streben definierten Richtung verfahrbar sind. Jeweils zwei gegenüberliegende Seiten der quaderförmigen inneren Werkzeugelemente 4 sind so ausgebildet, dass sie bei einem planen Anliegen an das jeweils angrenzende äußere Werkzeugelement 3 mit diesem eine Kavität ausbilden, in die mittels nicht dargestellter Spritzaggregate eine Kunststoffformmasse zur Herstellung eines Spritzgusseinzelteils eingespritzt werden kann. Nach einem ausreichenden Aushärten der Kunststoffformmasse werden die inneren Werkzeugelemente 4 translatorisch verfahren, wodurch die jeweils aus einem inneren und einem äußeren Werkzeugelement gebildete Form (Kavität) geöffnet wird. Die Spritzgusseinzelteile werden mittels nicht dargestellter Fixiervorrichtungen an dem jeweiligen inneren Werkzeugelement 4 fixiert.

Nach einer Rotation der beiden inneren Werkzeugelemente 4 um jeweils 180° werden diese soweit zusammengefahren, dass die zwei Spritzgusseinzelteile durch das Einspritzen eines thermoplastischen Elastomers in einen von den zwei Spritzgusseinzelteilen gebildeten Fügenahthohlraum mittels eines nicht dargestellten Fügeaggregats gefügt werden können.

Gleichzeitig werden die äußeren Werkzeugelemente 3 an die freien Seiten der inneren Werkzeugelemente 4 herangefahren, so dass ein Spritzgießen weiterer Spritzgusseinzelteile während des Fügeprozesses der zuvor hergestellten Spritzgusseinzelteile erfolgen kann.

Nach dem Fügen der ersten zwei Spritzgusseinzelteile und dem gleichzeitigen Spritzgießen der zweiten zwei Spritzgusseinzelteile werden die äußeren Werkzeugelemente 3 nach außen verfahren, wodurch die Spritzgusseinzelteile entformt werden und an den inneren Werkzeugelementen 4 fixiert bleiben. Gleichzeitig werden auch die zwei inneren Werkzeugelemente auseinander gefahren, so dass das gefügte Kunststoffbauteil von einem der inneren Werkzeugelemente 4 freigegeben wird, während es an dem anderen inneren Werkzeugelemente 4 fixiert bleibt. Nach einer Rotation der beiden inneren Werkzeugelemente 4 um 90° wird das fertige Kunststoffbauteil entnommen. Es folgt eine erneute Rotation der inneren Werkzeugelemente 4 um 90° und ein erneutes Zusammenfahren der vier Werkzeugelemente 3, 4 zu einem geschlossenen Block, so dass die zweiten zwei Spritzgusseinzelteile gefügt und ein drittes Paar von Spritzgusseinzelteile spritzgegossen werden kann.

Der oben beschriebene Zyklus wiederholt sich zur Herstellung einer Vielzahl von mehrteiligen Kunststoffbauteilen in einer hohen Taktzahl.

## Patentansprüche

1. Vorrichtung zum Spritzgießen eines mehrteiligen Kunststoffbauteils mit mindestens zwei äußeren Werkzeugelementen (3) und mindestens zwei zwischen den äußeren Werkzeugelementen (3) angeordneten inneren Werkzeugelementen (4), wobei die äußeren Werkzeugelemente (3) mit dem jeweils angrenzenden inneren Werkzeugelement (4) jeweils eine Kavität bilden, in die mittels eines oder mehrerer Spritzaggregate zur Erzeugung eines Spritzgusseinzelteils eine Kunststoffformmasse eingebracht werden kann, **dadurch gekennzeichnet, dass** die zwei inneren Werkzeugelemente (4) dreh- und/oder verfahrbar ausgebildet sind.

2. Vorrichtung gemäß Anspruch 1, **dadurch gekennzeichnet, dass** die inneren Werkzeugelemente (3) jeweils Mittel zur Fixierung des in der Kavität erzeugten Spritzgusseinzelteils aufweisen.

3. Vorrichtung gemäß Anspruch 1 oder 2, **dadurch gekennzeichnet, dass** mindestens eines der äußeren Werkzeugelemente (3) translatorisch verfahrbar ist.

4. Vorrichtung gemäß einem der vorhergehenden Ansprüche, **gekennzeichnet durch** mindestens ein Fügeaggregat.

5. Vorrichtung gemäß einem der vorhergehenden Ansprüche, **dadurch gekennzeichnet, dass** die inneren Werkzeugelemente (4) mindestens zwei Seiten aufweisen, die jeweils mit den äußeren Werkzeugelementen (3) eine Kavität ausbilden können.
